# EUROPEAN PATENT SPECIFICATION

(11) **EP 3 102 978 B1**
(45) Date of publication and mention of the grant of the patent: **28.10.2020**
(21) Application number: 15702133.8
(22) Date of filing: 29.01.2015
(51) Int. Cl.: G02F 1/1333, G02F 1/137, B32B 17/10, E06B 9/24

(54) **DEVICE FOR THE REGULATION OF LIGHT TRANSMISSION**
VORRICHTUNG ZUR REGELUNG DER LICHTTRANSMISSION
DISPOSITIF DE RÉGULATION DE LA TRANSMISSION DE LUMIÈRE

(30) Priority: 06.02.2014 EP 14154087
(43) Date of publication of application: 14.12.2016
(73) Proprietor: Merck Patent GmbH, 64293 Darmstadt (DE)
(72) Inventor: NEEFF, Rainer, 63263 Neu-Isenburg (DE); FIEBRANZ, Bernd, 64839 Muenster (DE); VAN OOSTEN, Casper Laurens, 5581CN Waalre (NL); CUMMING, Stephen, Poole Dorset BH14 8NT (GB)
(86) International application number: PCT/EP2015/000166
(87) International publication number: WO 2015/117736

(56) References cited:
- DE-A1- 3 330 305
- US-A- 5 589 272
- US-A1- 2005 068 629
- US-A1- 2012 038 841
- US-B1- 6 287 674
- US-B1- 6 309 901

## Description

The invention as described in the following pertains to a switchable liquid crystal (LC) window which is strong and lightweight and which is bendable in one or two directions.

Liquid crystal based switchable windows offer several benefits over traditional shading solutions: they switch fast, without noise and are compact. A particular embodiment of such windows are dye doped liquid crystal switchable windows. In this type of windows, the dyes have a primary absorption axis and the orientation of the absorption axis can be controlled by the orientation of the liquid crystal. When the absorption axis of the dye is in the plane of the window, the window is in the low transmissive or dark state. When the absorption axis of the dye is perpendicular to the plane of the window, the window is in its high transmissive or bright state.

The downside of dye doped liquid crystal based windows is that the switchable layer needs to be encapsulated between two substrates and that there are tight controls on the properties of these substrates in terms of the properties flatness, rigidity, strength, optical transparency, and thermal behavior. The two most common substrate types are glass and polymers. Glass is usually preferred over polymer as it has superior barrier properties, rigidity, transparency, and scratch resistance. The downside of glass substrates is that they are heavy, can only have limited bending in 1 or 2 directions and have limited strength to breakage due to thermal or physical stress.

This invention presents a glass based dye doped LC switchable window that overcomes these problems.

The traditional way to make a lightweight, strong and/or bent dye doped LC cell is to use polymer substrates. For example, US 2003/052838 A1 describes a method to make a double curved dye-dope LC device from thermoplastic polymer substrates. It is very difficult and therefore expensive to have a thermoplastic polymer with good long term barrier properties and high lifetime stability. Therefore, this is an expensive approach.

WO 2004/013060 A2 describes liquid crystal based switchable windows on flexible substrates from the group of 'plastic on glass', polyethyleneterephthalate (PET), cycloolefin polymers (COP), polybutyleneterephthalate, polyether sulfones (PES), polyamides, polycarbonates and polypropylene. Again, here these materials are limited in optical quality and long term lifetime properties.

DE 102006042538 A1 describes a combination of at least a thin and a thick glass sheet with a functionalized, potentially switchable layer on the thin glass. This invention sets clear prescription on the minimum thickness of the thick layer in order to obtain the desired strength of the composition. This has the downside that the total composition may become heavier than desired.

JP 2010-156784 A describes a curved LC display made from glass. In this case, one of the two glass sheets contains a TFT array, while the other glass sheet has a color filter and the liquid crystal does not contain dye. TFT arrays are complex to build and therefore bring extra cost to a device. Furthermore, the absence of dyes in the LC layer introduces the need to use 2 polarizers, which makes the device complex and expensive.

DE3330305A1 discloses a switchable window, which comprises a layer structure of two relatively thick glass sheets coated with ITO electrodes on their insides and alignment layers, and a layer of dye doped LC material in between the two glass sheets. However, no relevant bending of such structure without breakage is possible, and the structure is relatively heavy.

DE 102006042538A1 has as a further feature, compared to DE3330305A1, that the lamination of the LC cell to a further thick glass sheet is disclosed. However, as in DE3330305A1, the resulting structure is relatively heavy and cannot be bent to a relevant extent without damage.

US 2012/0038841 A1 and US 2005/0068629 A1 describe switchable windows having a liquid crystal cell which may include a dye and wherein the substrates may inter alia be made of glass. US 6,309,901 B1 describes the use of a glass laminate as a substrate for applying functional layers during the manufacturing of semiconductor devices.

JP2007102210 discloses a prior art switchable window.

The invention consists in a construction of selected glass types and a layer build-up for a guest-host dye doped liquid crystal window that creates a bendable, strong and lightweight window. This window is defined according to claim 1 and its preferred embodiments listed in the following.

Experts in the field would opt for polymers substrates rather than glass in order to solve this technical problem, as polymers are less brittle and can therefore be processed easier. Glass is not a material that is commonly regarded as a bendable material. In particular, it is unexpected for the skilled person that a sandwich of multiple layers, each with strict thickness tolerances, can be bent. The closest to the solution of the present invention, in terms of properties, is a polymer film with a protection (i.e. hard coat such as silicone oxide) layer deposited onto the polymer film. However, deposited polymer films have inferior properties (flatness, strength, migration of water) compared to full glass substrates. The present invention, in contrast, has the advantage that glass substrates are superior in flatness, stiffness and long term durability.

Preferred embodiments of the invention are illustrated by the figures.

The present invention provides a dye doped liquid crystal window as set forth in claim 1, comprising a liquid crystal cell, wherein the liquid crystal cell comprises two glass sheets (2, 7) that are each 0.02 mm to 0.7 mm thick. The glass sheets preferably are coated with two electrode layers (3, 5), both of which are on the insides of the glass sheets, pointing to the interior space which is between the two glass sheets. The interior space is filled with a layer of dye doped liquid crystal material (4).

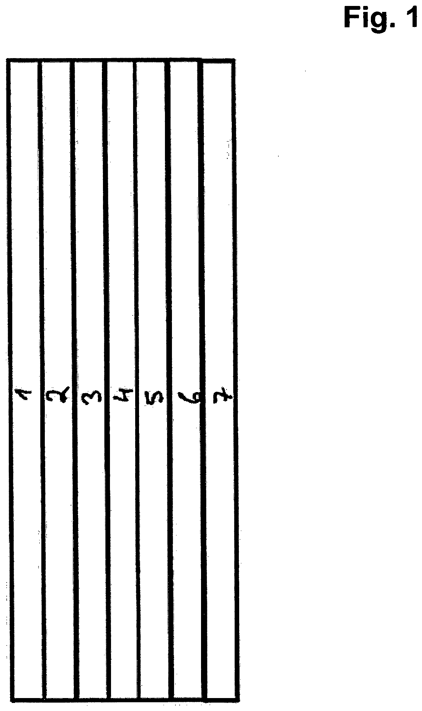

Figure 1 shows a component preferably comprised in the switchable LC window according to the invention. In this component, layers 1, 2, 3, 4, 5, 6 and 7 are located on top of each other, in this order.

Reference number 4 is a layer comprising dye doped liquid crystal material. The skilled person is aware of a number of different materials which can be used for this purpose. Examples are the materials listed in the description and the working examples, preferably the working examples, of WO 2009/141295, WO 2014/090367, WO 2014/090373, yet unpublished EP 13002711.3, yet unpublished EP 13005918.1, yet unpublished EP 14000141.3, yet unpublished EP 14001335.0 and yet unpublished EP 14154087.2. Preferably, the layer of dye doped liquid crystal has a thickness of 3 µm to 50 µm, preferably between 3 and 40 µm, particularly preferably between 5 µm and 25 µm.

Reference number 3 and 5 are electrodes. Preferably, these are transparent electrodes made from transparent conductive oxides (TCOs) such as ITO, FTO or similar materials. Preferably, the electrodes in addition comprise a liquid crystal alignment layer, which is located on the sides of the electrodes which point to the layer of dye doped liquid crystal. Such alignment layer is preferably made from polyimide or polyvinylalcohol, and is preferably subjected to a unidirectional rubbing treatment in order to obtain its aligning properties. An example of such alignment layer is the material AL-1054, which can be purchased from JSR.

Reference number 2 and 7 are glass sheets with a thickness of 0.02 mm to 0.7 mm. According to the invention, they are made of borosilicate glass or aluminosilicate glass. The glass is preferably glass with a low coefficient of thermal expansion. Particularly preferably, its coefficient of thermal expansion is between 2x10⁻⁶ / K and 5x10⁻⁶ / K. Such type of glass is commercially available from companies such as Schott or Corning. Regular glass has a coefficient between 6x10⁻⁶ / K and 1x10⁻⁵ / K, for the purpose of illustrating the difference. The coefficient of thermal expansion (CTE) of a material can be determined by measuring the geometrical deformation in a thermal-mechanical analyser (TMA), for example from supplier Perkin-Elmer or TA. Exact methods can be found in the application note "Thermal Analysis : Coefficient of Thermal Expansion Measurement using the TMA 4000" which was published by PerkinElmer, Inc. in 2013, and which is available as a paper copy and on the company website under http://www.perkinelmer.com/CMS Resources/Images/44-154298011175_01%20APP.pdf.

According to the invention, the two glass sheets 2 and 7 are both bent in one or more directions, preferably in one or two directions. The glass sheets are bent in a manner that they remain parallel to each other, i.e. are in a constant distance to each other over the whole area of the structure.

Reference number 1 and 6 are functional layers. Examples of such layers, which are optional for the invention, but are preferable under certain circumstances, are UV cut filters, IR cut filters, anti-reflective layers or barrier layers such as silicon oxide or silicon oxynitride. Instead of being located at the outside of the glass sheet 2, functional layer 1 may also be located between the glass sheet 2 and the electrode 3. Instead of being located between the glass sheet 7 and the electrode 5, functional layer 6 may also be located at the outside of the glass sheet 7.

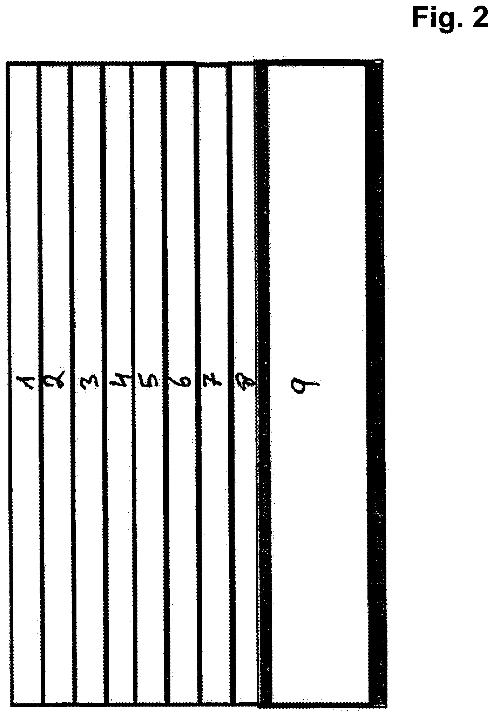

Figure 2 shows an embodiment of the switchable LC window according to the invention. It is characterized in that the component according to Figure 1 is further strengthened by laminating it with a suitable lamination material 8, such as PVB (polyvinylbutyral), TPU (thermoplastic urethane) or EVA (ethylene vinyl acetate), to a third sheet 9. The lamination material is preferably present in the form of foils or sheets of material. In the embodiment according to Figure 2, layers 1, 2, 3, 4, 5, 6, 7, 8 and 9 are located on top of each other, in this order.

The lamination material 8 may, according to one preferable embodiment, contain a polarizer filter for visible light and/or a filter UV blocking functionality. In this case, it is preferable that the respective filter is located as a sheet between the foils of lamination material.

If a polarizer filter is used, the absorption direction of the polarizer filter is preferably oriented perpendicular to the orientation of the absorption axis of the dye in the liquid crystal dye layer 4 when it is in the dark state. This has the effect that the switching contrast of the window is significantly increased. Further, it has the effect that the dark state of the device has significantly lower transmission.

In an alternative embodiment which is preferable under certain conditions, the structure according to Fig. 1 may be glued to a third sheet 9, instead of being laminated to it. Suitable materials may be pressure sensitive adhesive (PSA) such as 3M CEF 8187 or liquid optically clear adhesive such as LOCTITE 3195, both being commercially available.

According to the invention the third sheet 9 is made from strengthened glass with a thickness between 0.7 and 8 mm, preferably between 1 mm and 6 mm. Preferably, the glass sheet 9 is strengthened glass like Corning Gorilla Glass, Schott Xensation glass or Asahi Dragontrail glass. As strengthened glass, either chemically strengthened glass or physically strengthened glass such as tempered glass is used, or a combination of both types.

Chemically strengthened glass is a type of glass that has increased strength as a result of a post-production chemical process. Chemically strengthened glass has typically six to eight times the strength of float glass. Chemically strengthened glass is obtained by a surface finishing process. In it, the glass is submersed in a bath containing a potassium salt, preferably potassium nitrate, at about 300°C.

This causes sodium ions in the glass surface to be replaced by potassium ions from the bath solution. The surface compression of chemically strengthened glass preferably reaches up to 690 MPa. In an alternative, two-stage process for making chemically strengthened glass, the glass article is first immersed in a sodium nitrate bath at about 450 °C, which enriches the surface with sodium ions. This leaves more sodium ions on the glass for the immersion in potassium nitrate to replace with potassium ions. By this process, even more robust glass can be obtained.

Tempered glass can be made from annealed glass via a thermal tempering process. Annealing is a process of slowly cooling glass to relieve internal stresses after it was formed. In the thermal tempering process, the glass is taken through a furnace that heats it above its annealing point of about 720 °C. The glass is then rapidly cooled with forced air drafts while the inner portion remains free to flow for a short time. Tempered glass preferably has a breaking strength of more than 60 MPa.

According to the invention, the third sheet 9 is located on the side of the window which is the exterior side, i.e. the side facing to the outside.

Furthermore, it is preferable that the thermal expansion coefficients of the sheets of glass which are used in the layer structure of the window are similar. This has the effect that the build up of stress in the structure can be avoided, which leads to it being more robust and durable. It is particularly preferable that the coefficient of thermal expansion of the glass sheet with the lowest coefficient of thermal expansion differs by not more than 50%, more preferably 30%, most preferably 20% from the respective coefficient of the glass sheet with the highest coefficient of thermal expansion, where the difference in % is expressed relative to the coefficient of the glass sheet with the highest coefficient.

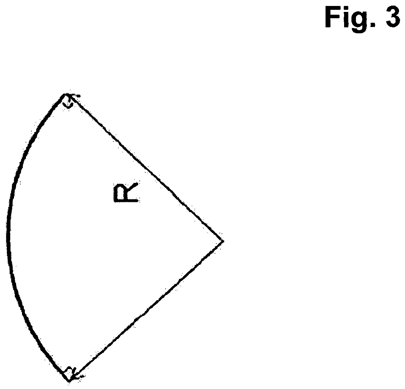

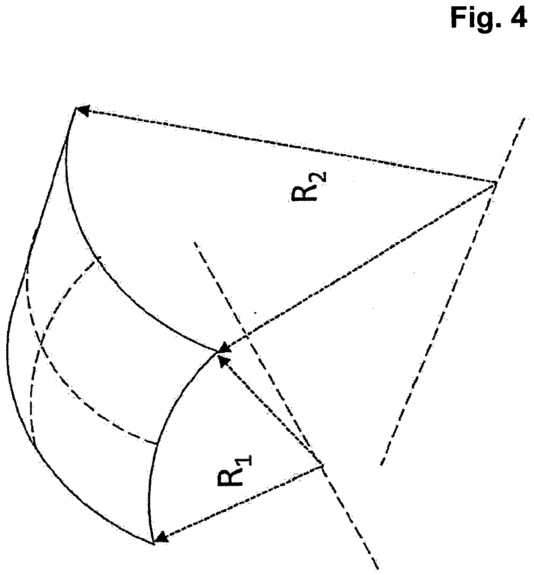

Figures 3 and 4 serve to further illustrate the switchable LC window according to the invention, which is bent in one or more directions, preferably in one or two directions.

According to one preferred embodiment, the window is bent in only one direction. In this case, the radius of its curvature is named R1. For the purposes of the present invention, the term "radius of curvature" is defined as the length of the radius R in Figure 3, where the bent LC switchable window is represented by the partial circle in Figure 3. If the window is bent in one direction only, it is preferred that the radius of its curvature is between 1 m and 10 m, preferably between 2 m and 8 m.

Further, it is preferred that the window is bent in two directions. In this case, its form can be described by two identical or different radii of curvature, named R1 and R2. Preferably, then, one of its radii of curvature is significantly higher than the other of its radii of curvature. Particularly preferably, one of its radii of curvature is higher by a factor of 10, particularly preferably higher by a factor of 20 than the other of its radii of curvature. The advantage of using radii of curvature in the two directions which differ significantly is that in this case, one of the radii can be relatively small, leading to a strong curving, without compromising the stability of the liquid crystal window. More particularly, if the window is bent in two directions, it is preferred that one of its radii of curvature is between 1 m and 10 m, preferably between 2 m and 8 m, whereas the second of its radii of curvature is between 10 m and 100 m, preferably between 20 m and 80 m.

A preferred embodiment of a window according to the present invention which is bent in two directions is shown in Fig. 4. This amounts to a biaxial bending of the window surface. In the case of the window being bent in two directions, it is preferred that the two bending axes are perpendicular to each other. In the context of the present invention, the term "bending axis" is defined as shown by the two dotted lines in Figure 4. The bending axis can be understood as the line drawn through the centers of the sectors of the circles which are formed by the surface of the curved LC cell.

In a preferred embodiment of the invention, the third sheet 9 is positioned on the convex side of the singly or doubly bent structure according to Figure 1 and this convex side points to the side of the dye doped liquid crystal window which points to the exterior.

The dye doped liquid crystal window according to the present invention can be prepared by the following procedure:
1) Assembling the dye doped liquid crystal cell, which comprises a dye doped liquid crystal layer situated between two glass sheets that are each 0.02 mm to 0.7 mm thick, and which have electrodes attached to their sides facing the dye doped liquid crystal layer;
2) Optionally stabilizing the edges of the glass sheets with a UV glue or adhesive;
3) Bending the assembled dye doped liquid crystal cell in one direction by using a pre-curved support, which is from glass;
4) Optionally bending the cell in a second direction by using a pre-curved support, which is from glass;
5) Fixing the cell in its bent state by glueing or laminating, preferably to the pre-curved support, which is from glass, wherein the cell
is kept in the pre-curved support until the full glue or lamination process has been completed.

The pre-curved support used in step 3 and/or 5 is a bent glass sheet, which is preferably bent in one or more directions, preferably in one or two directions. Further, preferably, the preferred embodiments listed above for the radii of curvature and the axes of curvature of the cell apply to the bent glass sheet used as pre-curved support as well.

The pre-curved support used in step 3 and/or step 5 of the process is a sheet made from chemically or physically strengthened glass. The glass sheet made from chemically or physically strengthened glass and used as pre-curved support has a thickness of from 0.7 mm to 8 mm.

The structure according to the present invention is relatively strong but may be sensitive to damages at the sides of the glass. If the glass edges are damaged, these faults may propagate through the glass, resulting in cracks and ultimately failure of the glass. Therefore, it is preferred that the edges of the glass are treated, for example by grinding or polishing, or by laser cutting. The edges of the glass can be further protected by encapsulating them or by making the thin glass attached to the thicker glass sheet slightly smaller than the thick glass. It is especially preferable to use the specific embodiments disclosed in US 2010020381 A1, which is incorporated herewith by reference. Most preferable are the specific embodiments shown in Fig. 1 and Fig. 2 of US 2010020381 A1.

The switchable window according to the present invention is preferably used for the regulation of sunlight transmission. Further preferably, it is used in cars, trucks, trains or other vehicles, where bent surfaces are highly common and desirable due to design and aerodynamics requirements. However, it may be used in buildings as well, for example in facades or other external surfaces, especially those which are exposed to significant sunlight intensity. The switchable window may also be used in visors, in particular helmet visors, revolving doors and the like.

### Listing of Figures and reference numbers

Figure 1 shows a component of the switchable LC window according to the invention.
Figure 2 shows an embodiment of the switchable LC window according to the invention.
Figure 3 serves to further illustrate a third embodiment of the switchable LC window according to the invention, wherein the window is bent.
Figure 4 serves to illustrate an embodiment of the switchable LC window according to the invention, wherein the window is bent in two directions.

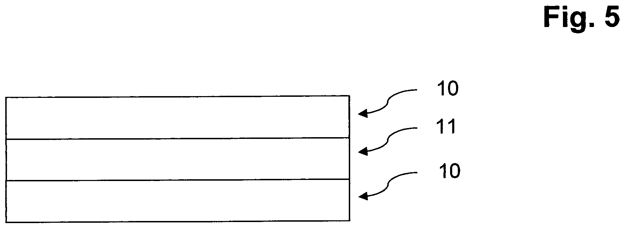

Figure 5 shows the build up of the inventive LC cell according to working example 1.
Figure 6 shows the build up of the window unit according to comparative example 1.
Figure 7 shows the build up of the window unit according to comparative example 2.
Figure 8 shows the build up of the window unit according to comparative example 3.

In the figures, the reference numbers are as follows:
1 Functional layer
2 Glass sheet
3 Electrode, preferably coated with alignment layer
4 Layer of dye doped liquid crystal material
5 Electrode, preferably coated with alignment layer
6 Functional layer
7 Glass sheet
8 Lamination material
9 Third sheet made of glass as set forth in claim 1
10 Glass sheet of 0.3 mm borosilicate glass, ITO coated on the inside and coated with alignment layer on the inside
11 LC-dye mixture
12 Glass sheets of 4 mm soda-lime float glass
13 Argon-filled space
14 Glass sheets of 3 mm soda-lime float glass, ITO coated on the inside and coated with alignment layer on the inside
15 PVB foil

The following working examples serve the purpose of illustrating the invention. They are not to be understood as limiting the invention as claimed in the present invention in any way.

### Working examples

### 1) Manufacturing of the liquid crystal cell

On ITO (Indium Tin Oxide, 100 nm) coated 0.3 mm thick borosilicate glass substrates (product MDT No. 255725 from Merck Display Technologies, Ltd.), a planar alignment layer (AL-1054, JSR) is spin coated and cured in an oven at 180°C for 90 min. The layer thickness of the alignment layer is approx. 50 nm. The surfaces of the alignment layers are then rubbed with a rayon cloth to introduce the orientation for the LC molecules. On top of one substrate a glue frame loaded with 25 µm spacer is then dispensed. In addition spacers of the same size are sprayed with a wet spraying process onto the entire substrate area. The second substrate is then positioned onto the first substrate with both rubbing directions having anti-parallel directions. The two glasses are heated and pressed in a cell pressing unit to fix the two substrates and reach the final cell gap of 25 µm (= distance between lower and upper substrate). In the next step, the glass cell is filled in a vacuum filling equipment with a dye doped LC mixture. The mixture used is the same as the one used in published patent application WO 2014/135240, named mixture "H2", in combination with 0.11 weight % of dye D1, 0.15 weight % of dye D2 and 0.23 weight % of dye D3, where the dyes D1, D2 and D3 are mentioned under these names in the above patent application as well. After closing the filling holes of the glue frame with a UV glue, the edges of the cell are stabilized with a UV adhesive to prevent the breakage of the glass substrates from outside. The weight of the cell is 1.5 kg per m². A side-view of the LC cell of this example is shown in Figure 1.

### 2) Bending of the liquid crystal cell

The cell made with the thin glass substrates shows good flexibility and can be easily bent to a minimum radius of approximately 1 m. This is achieved by placing a 200 mm x 300 mm large LC cell, manufactured as above, on a laboratory watch-glass placed with its convex side upwards. The watch-glass has a height of approximately 20 mm and a diameter of approximately 80 mm, so that it supports the curvature which is introduced to the LC cell to some extent, and distributes the pressure which is exerted on the cell over a certain area of the LC cell, avoiding too high forces at a particular point of the cell. The bending of the LC cell is eventually achieved by pressing gently onto two points on opposite sides of the rectangular LC cell. The LC cell can be fixed in its bent state by e.g. placing weights on the sides which were pressed down. It is confirmed that the color homogeneity and operation (switching) of the cell is not affected by the bending of the cell and the switching of the LC layer works just the same as with the cell in its flat state.

To prepare the bent LC windows, the cells are pressed into a pre-curved support, e.g. a mold, which has the desired radius of curvature, and fixed in this pre-curved support by the use of an adhesive. Suitable pre-curved supports can be made from curved thick glass, such as Gorilla Glass from Corning, having a thickness of about 1 mm. By this process, a laminate of the LC cell and a thick glass sheet is obtained, which has the radius of curvature of the thick glass sheet which has been used as the pre-curved support.

Bending in two directions can be done by an analogous procedure, where with a first bending radius being larger than 10 m, a second bending radius of between 50 m and 100 m can be achieved.

### 3) Use of the bent LC window

The bent LC window can be switched from its clear state to its dark state by application of the appropriate voltage, whilst its switching characteristics are unaffected by the curved form into which the LC window has been brought.

### 4) Comparative example 1

Following the technical teaching of DE3330305A1, a switchable window is built. This window corresponds to a triple glazing window, wherein the middle glass sheet is replaced by a switchable LC cell using a dye-doped liquid crystalline mixture.

The exact procedure is as follows: 3 mm glass sheets made of soda-lime float glass are chosen for the switchable LC cell of the setup of DE3330305A1. Such glass sheets are very frequently used in the glass industry. The glass sheets are coated with a transparent conductive layer from indium tin oxide. A polyimide layer (JSR AL 1254) with a thickness of about 50 nm is coated on top of the conductive layer and is baked (60 min at 200°C). The polyimide layer is buffed to achieve the desired pre-tilt of the LC mixture in the state without voltage applied. Plastic spacer balls with 25 µm diameter (Sekisui MicroPearl) are used to separate the two glass sheets. The glass sheets are kept together by a seal around the perimeter of the glass. Dye doped LC, as specified in Example 1, is filled into the cavity using a vacuum process. The filling openings are sealed using UV curable adhesive.

The resulting switchable LC cell has a weight of 20 kg/m². It is not possible to achieve any measurable bending to it by the process described under 2).

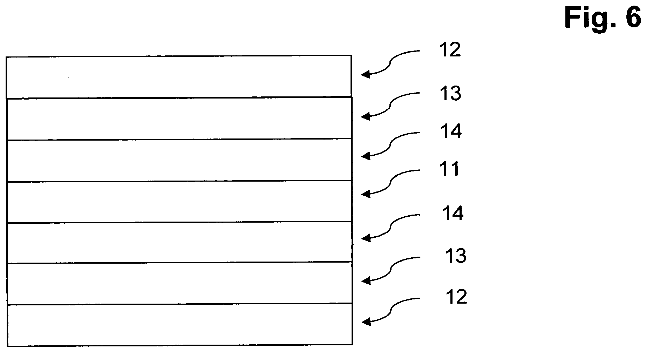

The product can be made into a triple glazing unit as described in DE 3330305A1, using two further sheets of 4 mm glass and an argon filling for the open spaces between the glass sheets and the LC cell. The weight of the complete insulation glass unit is 60 kg/m². A side view of whole unit according to this example is shown in Figure 6.

### 5) Comparative example 2

In this example, the procedure from comparative example 1 is followed to create the initial dye-doped LC cell. This procedure is then combined with the teaching of DE 102006042538A1.

The exact procedure used is as follows: To the LC cell of comparative example 1, a third structural glass sheet, 4 mm thick, is laminated using PVB (polyvinylbutyral) foil width a thickness of 0.76 mm from Sekisui S-Lec. In this case, the LC cell was made from two times 3 mm glass. The lamination is done using standard PVB lamination conditions (120 - 150 ° C, 400 - 900 mBar vacuum) in a sheet laminator.

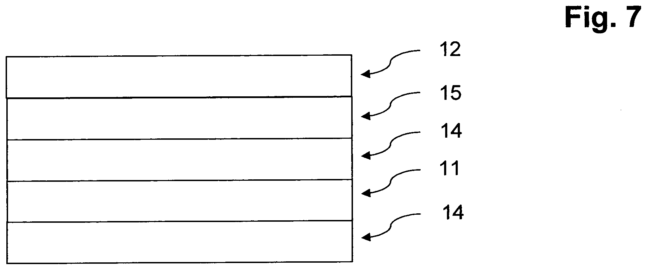

The weight of the laminated product comprising three glass sheets is 25 kg/m². It is not possible to achieve any significant bending in this build-up. A side-view of the LC cell of this example is shown in Figure 7.

### 6) Comparative example 3

A symmetrical double glazing unit is built, using two of the glass laminates of comparative example 2. The full build-up, outside-to-inside, is: 4 mm soda-lime float glass, 0.76 mm PVB, 3 mm ITO coated soda lime float glass, 0.25 µm LC layer, 3 mm ITO coated soda lime float glass, 20 mm argon-filled cavity, 3 mm ITO coated soda lime float glass, 0.25 µm LC layer, 3 mm ITO coated soda lime float glass, 0.76 mm PVB, 4 mm soda lime float glass.

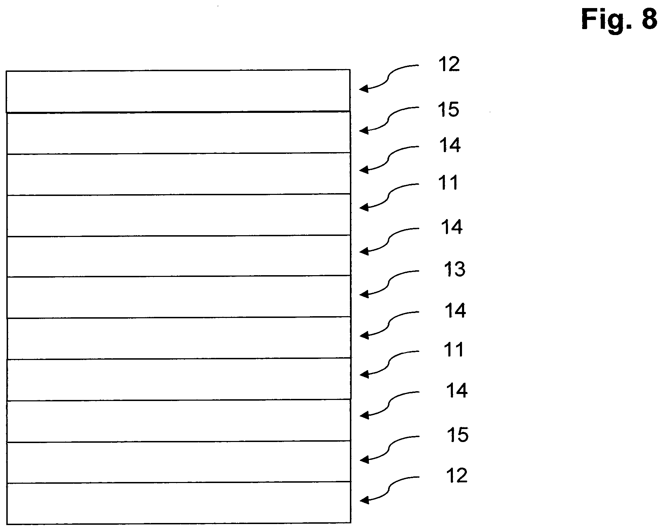

A build up using two LC cells is useful for achieving high transmission differences between the dark state and the clear state. It is described in detail in WO2014/180525. A side view of the LC cell of this example is shown in Figure 8. With the product, a pendulum test is performed according to E DIN EN 12600 1996-12. The test setting is carried out with a pendulum impact height of 450 mm respectively 900 mm and a soft impact body ('double tyre') with a mass of 50 kg, with the tire filled with a pressure of 4 bar. When dropping the weight against the window, the window breaks at the location of the impact. However, there are no fragments of window material released outside the window.

## Claims

1. Dye doped liquid crystal switchable window, comprising a liquid crystal cell, wherein the liquid crystal cell comprises two glass sheets (2, 7) that are each 0.02 mm to 0.7 mm thick, wherein the two glass sheets (2, 7) are bent in one or more directions and wherein the glass sheets (2, 7) are, identically or differently, made from borosilicate glass or aluminosilicate glass, and wherein the dye doped liquid crystal switchable window further comprises a third sheet (9), wherein the third sheet (9) is made from physically and/or chemically strengthened glass, has a thickness of between 0.7 mm and 8 mm and is positioned on the exterior side of the window.

2. Dye doped liquid crystal switchable window according to claim 1, wherein the two glass sheets (2, 7) are bent in one or two directions.

3. Dye doped liquid crystal switchable window according to claim 1 or 2, wherein the third sheet (9) is bent in one or more directions, preferably one or two directions.

4. Dye doped liquid crystal switchable window according to one or more of claims 1 to 3, wherein the liquid crystal cell has a first radius of curvature R1 between 1 and 100 m.

5. Dye doped liquid crystal switchable window according to claim 4, wherein the liquid crystal cell has a second radius of curvature R2 between 10 and 100 m.

6. Dye doped liquid crystal switchable window according to claim 5, wherein the bending axis of the second radius of curvature R2 is perpendicular to the bending axis of the first radius of curvature R1.

7. Dye doped liquid crystal switchable window according to one or more of claims 1 to 6, wherein the third sheet (9) is attached to one of the glass sheets (2, 7) of the liquid crystal cell by means of a lamination material (8) or a glue.

8. Dye doped liquid crystal switchable window according to claim 7, wherein the lamination material (8) contains a polarization filter, which is oriented with its absorption direction perpendicular to a dye absorption axis of the dye in a dark state of the window.

9. Dye doped liquid crystal switchable window according to one or more of claims 1 to 8, wherein the coefficient of thermal expansion of the glass sheet with the lowest coefficient of thermal expansion differs by not more than 50%, more preferably 30%, most preferably 20% from the respective coefficient of the glass sheet with the highest coefficient of thermal expansion, where the difference in % is expressed relative to the coefficient of the glass sheet with the highest coefficient.

10. Dye doped liquid crystal switchable window according to one or more of claims 1 to 9, wherein the layer of the dye doped liquid crystal material (4) has a thickness of 10 µm to 50 µm.

11. Process of making the dye doped liquid crystal switchable window of one or more of claims 1 to 10, comprising the following steps:
1) Assembling the dye doped liquid crystal cell, which comprises a dye doped liquid crystal layer (4) situated between two glass sheets (2, 7) that are each 0.02 mm to 0.7 mm thick, and which have electrodes (3, 5) attached to their sides facing the dye doped liquid crystal layer;
2) Optionally stabilizing the edges of the glass sheets with a UV glue or adhesive;
3) Bending the assembled dye doped liquid crystal cell in one direction by using a pre-curved support;
4) Optionally bending the cell in a second direction by using a pre-curved support;
5) Fixing the cell in its bent state by glueing or laminating, wherein the cell is kept in the pre-curved support until the full glue or lamination process has been completed, wherein the pre-curved support is a bent glass sheet, which is made of chemically and/or physically strengthened glass.

12. Use of the dye doped liquid crystal switchable window according to one or more of claims 1 to 10 in cars, trucks, trains or other vehicles, or in building facades, or in visors or other external surfaces, for the regulation of the transmission of sunlight.

## Patentansprüche

1. Farbstoffdotiertes schaltbares Flüssigkristallfenster enthaltend eine Flüssigkristallzelle, wobei die Flüssigkristallzelle zwei Glasplatten (2, 7) enthält, die jeweils 0,02 mm bis 0,7 mm dick sind, wobei die beiden Glasplatten (2, 7) in eine oder mehrere Richtungen gebogen sind und wobei die Glasplatten (2, 7) gleich oder verschieden aus Borsilikatglas oder Aluminiumsilikatglas hergestellt sind, und wobei das farbstoffdotierte schaltbare Flüssigkristallfenster ferner eine dritte Platte (9) enthält, wobei die dritte Platte (9) aus physikalisch und/oder chemisch vorgespanntem Glas hergestellt ist, eine Dicke zwischen 0,7 mm und 8 mm aufweist und an der Außenseite des Fensters angeordnet ist.

2. Farbstoffdotiertes schaltbares Flüssigkristallfenster nach Anspruch 1, wobei die beiden Glasplatten (2, 7) in eine oder zwei Richtungen gebogen sind.

3. Farbstoffdotiertes schaltbares Flüssigkristallfenster nach Anspruch 1 oder 2, wobei die dritte Platte (9) in eine oder mehrere Richtungen, vorzugsweise eine oder zwei Richtungen gebogen ist.

4. Farbstoffdotiertes schaltbares Flüssigkristallfenster nach einem oder mehreren der Ansprüche 1 bis 3, wobei die Flüssigkristallzelle einen ersten Krümmungsradius R1 zwischen 1 und 100 m aufweist.

5. Farbstoffdotiertes schaltbares Flüssigkristallfenster nach Anspruch 4, wobei die Flüssigkristallzelle einen zweiten Krümmungsradius R2 zwischen 10 und 100 m aufweist.

6. Farbstoffdotiertes schaltbares Flüssigkristallfenster nach Anspruch 5, wobei die Biegeachse des zweiten Krümmungsradius R2 senkrecht zur Biegeachse des ersten Krümmungsradius R1 steht.

7. Farbstoffdotiertes schaltbares Flüssigkristallfenster nach einem oder mehreren der Ansprüche 1 bis 6, wobei die dritte Platte (9) mittels eines Laminiermaterials (8) oder eines Leims an einer der Glasplatten (2, 7) der Flüssigkristallzelle befestigt ist.

8. Farbstoffdotiertes schaltbares Flüssigkristallfenster nach Anspruch 7, wobei das Laminiermaterial (8) ein Polarisierungsfilter enthält, das mit seiner Absorptionsrichtung senkrecht zur einer Farbstoffabsorptionsachse des Farbstoffs in einem dunklen Zustand des Fensters ausgerichtet ist.

9. Farbstoffdotiertes schaltbares Flüssigkristallfenster nach einem oder mehreren der Ansprüche 1 bis 8, wobei der Wärmeausdehnungskoeffizient der Glasplatte mit dem niedrigsten Wärmeausdehnungskoeffizienten um nicht mehr als 50%, stärker bevorzugt 30%, am stärksten bevorzugt 20% vom jeweiligen Koeffizienten der Glasplatte mit dem höchsten Wärmeausdehnungskoeffizienten verschieden ist, wobei der Unterschied in % relativ zum Koeffizienten der Glasplatte mit dem höchsten Koeffizienten ausgedrückt ist.

10. Farbstoffdotiertes schaltbares Flüssigkristallfenster nach einem oder mehreren der Ansprüche 1 bis 9, wobei die Schicht des farbstoffdotierten Flüssigkristallmaterials (4) eine Dicke von 10 µm bis 50 µm aufweist.

11. Verfahren zur Herstellung des farbstoffdotierten schaltbaren Flüssigkristallfensters nach einem oder mehreren der Ansprüche 1 bis 10, umfassend die folgenden Schritte:
1) Zusammensetzen der farbstoffdotierten Flüssigkristallzelle, die eine farbstoffdotierte Flüssigkristallschicht (4) enthält, die zwischen zwei Glasplatten (2, 7) angeordnet ist, die jeweils 0,02 mm bis 0,7 mm dick sind und an deren der farbstoffdotierten Flüssigkristallschicht zugewandten Seiten Elektroden (3, 5) befestigt sind;
2) gegebenenfalls Stabilisieren der Ränder der Glasplatten mit einem UV-Leim oder -Klebstoff;
3) Biegen der zusammengesetzten farbstoffdotierten Flüssigkristallzelle in eine Richtung durch Verwendung einer vorgebogenen Unterlage;
4) gegebenenfalls Biegen der Zelle in eine zweite Richtung durch Verwendung einer vorgebogenen Unterlage;
5) Fixieren der Zelle in ihrem gebogenen Zustand durch Leimen oder Laminieren, wobei die Zelle auf der vorgebogenen Unterlage verbleibt, bis das Leim- oder Laminierverfahren vollständig abgeschlossen ist, wobei die vorgebogene Unterlage eine gebogene Glasplatte ist, die aus chemisch und/oder physikalisch vorgespanntem Glas hergestellt ist.

12. Verwendung des farbstoffdotierten schaltbaren Flüssigkristallfensters nach einem oder mehreren der Ansprüche 1 bis 10 in Autos, Lastkraftwagen, Zügen oder anderen Fahrzeugen oder in Gebäudefassaden oder in Visieren oder anderen Außenflächen zur Regulierung der Transmission von Sonnenlicht.

## Revendications

1. Fenêtre pouvant être commutée à cristaux liquides dopés par colorant(s), comprenant une cellule de cristaux liquides, dans laquelle la cellule de cristaux liquides comprend deux feuilles de verre (2, 7) qui présentent chacune une épaisseur de 0,02 mm à 0,7 mm, dans laquelle les deux feuilles de verre (2, 7) sont fléchies dans une ou plusieurs direction(s) et dans laquelle les feuilles de verre (2, 7) sont, de manière identique ou différente, réalisées à partir de verre de borosilicate ou de verre d'aluminosilicate, et dans laquelle la fenêtre pouvant être commutée à cristaux liquides dopés par colorant(s) comprend en outre une troisième feuille (9), dans laquelle la troisième feuille (9) est réalisée à partir de verre renforcé physiquement et/ou chimiquement, présente une épaisseur entre 0,7 mm et 8 mm et est positionnée sur le côté extérieur de la fenêtre.

2. Fenêtre pouvant être commutée à cristaux liquides dopés par colorant(s) selon la revendication 1, dans laquelle les deux feuilles de verre (2, 7) sont fléchies dans une ou deux direction(s).

3. Fenêtre pouvant être commutée à cristaux liquides dopés par colorant(s) selon la revendication 1 ou 2, dans laquelle la troisième feuille (9) est fléchie dans une ou plusieurs direction(s), de préférence dans une ou deux direction(s).

4. Fenêtre pouvant être commutée à cristaux liquides dopés par colorant(s) selon une ou plusieurs des revendications 1 à 3, dans laquelle la cellule de cristaux liquides présente un premier rayon de courbure R1 entre 1 et 100 m.

5. Fenêtre pouvant être commutée à cristaux liquides dopés par colorant(s) selon la revendication 4, dans laquelle la cellule de cristaux liquides présente un second rayon de courbure R2 entre 10 et 100 m.

6. Fenêtre pouvant être commutée à cristaux liquides dopés par colorant(s) selon la revendication 5, dans laquelle l'axe de flexion du second rayon de courbure R2 est perpendiculaire à l'axe de flexion du premier rayon de courbure R1.

7. Fenêtre pouvant être commutée à cristaux liquides dopés par colorant(s) selon une ou plusieurs des revendications 1 à 6, dans laquelle la troisième feuille (9) est liée à l'une des feuilles de verre (2, 7) de la cellule de cristaux liquides au moyen d'un matériau de stratification (8) ou d'une colle.

8. Fenêtre pouvant être commutée à cristaux liquides dopés par colorant(s) selon la revendication 7, dans laquelle le matériau de stratification (8) contient un filtre de polarisation, lequel est orienté de sorte que sa direction d'absorption est perpendiculaire à un axe d'absorption de colorant(s) du colorant dans un état sombre de la fenêtre.

9. Fenêtre pouvant être commutée à cristaux liquides dopés par colorant(s) selon une ou plusieurs des revendications 1 à 8, dans laquelle le coefficient de dilatation thermique de la feuille de verre qui présente le coefficient de dilatation thermique le plus faible diffère de pas plus de 50 %, de façon davantage préférable de 30 %, de la façon la plus préférable de 20 % par rapport au coefficient respectif de la feuille de verre qui présente le coefficient de dilatation thermique le plus élevé, où la différence en % est exprimée par rapport au coefficient de la feuille de verre qui présente le coefficient le plus élevé.

10. Fenêtre pouvant être commutée à cristaux liquides dopés par colorant(s) selon une ou plusieurs des revendications 1 à 9, dans laquelle la couche du matériau de cristaux liquides dopés par colorant(s) (4) présente une épaisseur de 10 µm à 50 µm.

11. Procédé de fabrication de la fenêtre pouvant être commutée à cristaux liquides dopés par colorant(s) selon une ou plusieurs des revendications 1 à 10, comprenant les étapes qui suivent :
1) l'assemblage de la cellule de cristaux liquides dopés par colorant(s), laquelle comprend une couche de cristaux liquides dopés par colorant(s) (4) qui est située entre deux feuilles de verre (2, 7) qui présentent chacune une épaisseur de 0,02 mm à 0,7 mm, et qui comportent des électrodes (3, 5) qui sont liées à leurs côtés qui font face à la couche de cristaux liquides dopés par colorant(s) ;
2) en option, la stabilisation des bords des feuilles de verre avec une colle ou un adhésif UV ;
3) la flexion de la cellule de cristaux liquides dopés par colorant(s) assemblée dans une direction en utilisant un support pré-incurvé ;
4) en option, la flexion de la cellule dans une seconde direction en utilisant un support pré-incurvé ;
5) la fixation de la cellule dans son état fléchi par collage ou stratification, dans lequel la cellule est maintenue dans le support pré-incurvé jusqu'à ce que le procédé complet de collage ou de stratification ait été terminé, dans lequel le support pré-incurvé est une feuille de verre fléchie, qui est réalisée à partir de verre chimiquement et/ou physiquement renforcé.

12. Utilisation de la fenêtre pouvant être commutée à cristaux liquides dopés par colorant(s) selon une ou plusieurs des revendications 1 à 10 dans les voitures, les camions, les trains ou d'autres véhicules, ou au niveau de façades de bâtiments, ou dans les pare-soleil ou d'autres surfaces externes, pour la régulation de la transmission de la lumière du soleil.
